# EUROPEAN PATENT APPLICATION

(11) **EP 1 936 864 A1**
(43) Date of publication of application: **25.06.2008**
(21) Application number: 06026738.2
(22) Date of filing: 22.12.2006
(51) Int. Cl.: H04L 12/18

(54) **System and method for distributing information**

(71) Applicant: Koninklijke KPN N.V., 2516 CK The Hague (NL)
(72) Inventor: Waarsenburg, Franciscus Ludovicus Jozef, 2728 DK Zoetermeer (NL)
(74) Representative: Wuyts, Koenraad Maria

(57) **Abstract**

A system for distributing information, the system comprising:
-a plurality of local information presentation systems (5) configured to locally present information;
-a central server (1) configured to provide updated information (Iᵤ);
-one or more communication networks (N), for example internet or an intranet, configured to provide communication between the central server (1) and the local presentation systems (5);

wherein the plurality of local presentation systems (5) comprises:
-at least one first local presentation system (5A) configured to cooperate with the central server (1), such that the first local presentation system (5A) receives the updated information (Iᵤ) from the central server (1) during operation; and
-at least one second local presentation system (5B), wherein each second local presentation system (5B) is configured to cooperate with a first local presentation system (5A), such that the second local presentation system receives the updated information (Iᵤ) from the first local presentation system (5A).

## Description

### FIELD

The invention relates to a system and method for distributing information, for example for narrowcasting information.

### BACKGROUND

Narrowcasting systems are known from the prior art, and are currently marketed by the company Eye-Display b.v. (Zoetermeer, the Netherlands). For example, the known system can provide a dedicated means to provide brand and product marketing. The known system comprises a plurality of local information presentation systems, each of which is configured to locally present information, for example to customers in a store, and/or in different locations.

Also, the known system comprises a central server (called i-Central) configured to provide updated information at desired times (for example once a week), which updated information is transmitted to the local applications to update the information that is to be presented. To provide communication between the central server and the local presentation systems, the local systems can communicate with the central server via the internet.

Each local presentation system can include one or more components, for example a local application to control local eYe-Display store applications (called i-Store). The i-Store application can be installed on a store server and can handle in- and outbound traffic to and from the central server. In the known system, each local i-Store application can also process decompression of content, its storage in the correct production directory and process statistics and management information. Optional security measures for remote login and firewalling are also handled by a local i-Store application.

Also, a local presentation system can include one or more electronic screens, displays and/or other information presenters, to be arranged locally to present the information to, for example, customers. Besides, there can be provided a software tool (called i-Display), to be executed locally, for dynamic in store promotion and advertising via digital distribution to any electronic screen/display any place, anywhere in a local environment.

Besides, as an example, the known system can include local applications (called Intelligent Shelf Communicators) to provide dedicated in store promotion and communication on the shelf at Fresh Food departments of stores. At these departments daily many price and product changes are being made. Each Shelf Communicator can comprise a display (for example a small full colour LCD screen with integrated processor) showing product information and prices, like country of origin, price, special offers, and/or product pictures. Several of such local Shelf Communicators can be controlled, for example, via an above-mentioned local i-Display tool.

Moreover, local communication between various local appliances (Shelf Communicators, i-Display tool, i-Store) can be provided via suitable local communication means, for example a local computer network, a wireless and/or wired Local Area Network, or in a different manner.

A problem of known narrowcasting systems is that the cumulative amount of data to be transmitted from the central server to the plurality of local information presentation systems increases with the amount of local presentation systems. For example, in the case that the updated information, to be presented locally, has a size of 200 Mb (Megabyte) and 500 local presentation systems of 500 local stores have to receive that information, a cumulative amount of 500x200=100,000 Mb of data has to be transmitted by the central server. This leads to long data transmission times. Moreover, it is expected that the amount of data to be transmitted will still increase in the future, due to increasing complexity of the information to be sent, due to increase of use of audio and/or video in the information, and due to an increasing demand for the narrowcasting of information. A solution to this problem is to provide high bandwidth (>1 Mbps) broadband network connections between the central server and the local information presentation systems, however, this leads to a significant increase of operating costs of the overall system since high bandwidth network connections are relatively expensive. Besides, the application of relatively expensive high data rate network connections might still not be sufficient to cope with the expected rise of the overall size of updated information, to be transmitted.

### SUMMARY

The present invention aims to alleviate the above-mentioned problems. Particularly, the invention aims to provide a system and method to distribute information, wherein large amounts of updated information can be transmitted to a large number of local information presentation systems within practical or realistic time periods, without the need of the application of expensive high bandwidth network connections.

To this aim, according to an embodiment of the invention, the system is characterised by:
- at least one first local presentation system configured to cooperate with the central server, such that the first local presentation system receives the updated information from the central server during operation; and
- at least one second local presentation system, wherein each second local presentation system is configured to cooperate with a first local presentation system, such that the second local presentation system receives the updated information from the first local presentation system.

Thus, large amounts of updated information distributed (for example to be narrowcasted locally, or to be distributed for another purpose), can be distributed relatively swiftly to a large number of local presentation systems, preferably using relatively low data rate communication lines. Particularly, each first local presentation system as such can serve as an information server to one or more further local presentation systems, so that the communication network can be used in a very efficient manner. Also, in this way, relatively cheap network communication connections having relatively low data capacity can be used to transmit updated information, to be distributed, to all of the local information presentation systems. In this way, the present invention can provide an optimized distribution model, for example for narrowcasting.

Thus, for example, local retailers that have installed local narrowcasting systems in their stores can connect these local systems to a communication network, particularly the internet (or wide area network, WAN) or an intranet, to receive and transmit updated information, wherein the connection to the communication network can be of a cheap and low data rate type (for example having a maximum upload and/or download rate of 1 Mbps, particularly a maximum upload and/or download rate of 256 kbps), for example ISDN (Integrated Services Digital Network) connections, and/or ADSL (Asymmetric Digital Subscriber Line) connections. For example, in the case of ISDN the data rate can be 128 kbps or 64 kbps.

According to an alternative embodiment, the present system can advantageously be used to distribute updated near-time information, for example containing weather information, news, stock exchange information, news headlines and/or traffic information, and other types of information, for example to a plurality of end-user computers.

An embodiment of the invention provides a method for distributing information, the method comprising:
- providing a number of presentation systems that locally present information;
- centrally generating updated information; and
- distributing the updated information to the local presentation systems, to replace information that is presented by these local systems;
the method being characterised in that it comprises:
- transmitting the updated information to a first presentation system being associated with a first location; and
- transmitting the updated information from the first presentation system to a second local presentation system being associated with a second location.

This method can provide the above-mentioned advantages, wherein large amounts of updated information can be transmitted to a plurality of local information presentation systems, for example via the internet or an intranet, in an efficient manner.

Also, an embodiment provides a computer program comprising computer code for performing a method according to any of the claims 11-17 when the program is being executed by a computer. For example, an embodiment can provide digital machine readable instructions, particularly software code, configured to cause a machine to carry out a method according to the invention when executed by the machine, particularly to provide a local information presentation system according to the invention. Besides, there can be provided digital machine readable instructions, particularly software code, configured to cause a machine to provide a central server of a system according to the invention. Also, for example, according to an embodiment of the invention there can be provided a data carrier carrying these digital machine readable instructions.

Besides, an embodiment provides a computer network communication protocol configured to carry out the method according to any of the claims 11-17 when executed by a computer communication network.

Further advantageous embodiments of the invention are described in the dependent claims. These and other aspects of the invention will be apparent from and elucidated with reference to non-limiting embodiments described hereafter, shown in the drawings.

### BRIEF DESCRIPTION OF THE DRAWINGS

Figure 1 schematically depicts a system according to an embodiment of the invention;
Figure 2 schematically depicts a local presentation system of the embodiment shown in Fig. 1;
Figure 3 depicts a further embodiment of the invention;
Figure 4 schematically depicts a package of information, being divided into parts;
Figure 5 depicts a graph shown allocated network capacity as function of time; and
Figure 6 depicts an alternative embodiment of the invention.

### DETAILED DESCRIPTION

Similar or corresponding features are denoted by similar or corresponding reference signs in the present patent application.

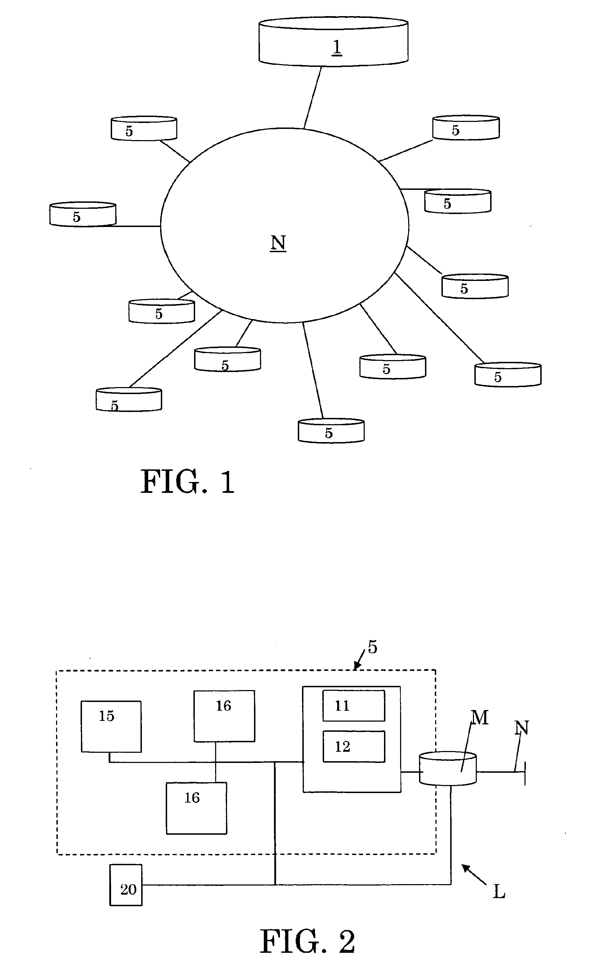

Figure 1 shows an embodiment of a system for distributing information, for example for narrowcasting information. The system can be used, for example, by a retail organisation having a large number of stores, wherein the system can present the information in each store to customers visiting the store.

The system comprises a plurality of local information presentation systems 5 configured to locally (for example in and/or near a respective store) present information, and a central server 1 configured to centrally provide updated information Iᵤ, which updated information is to replace/update narrowcasting information that is present locally. In an embodiment, the information can contain one or more of audio and video information.

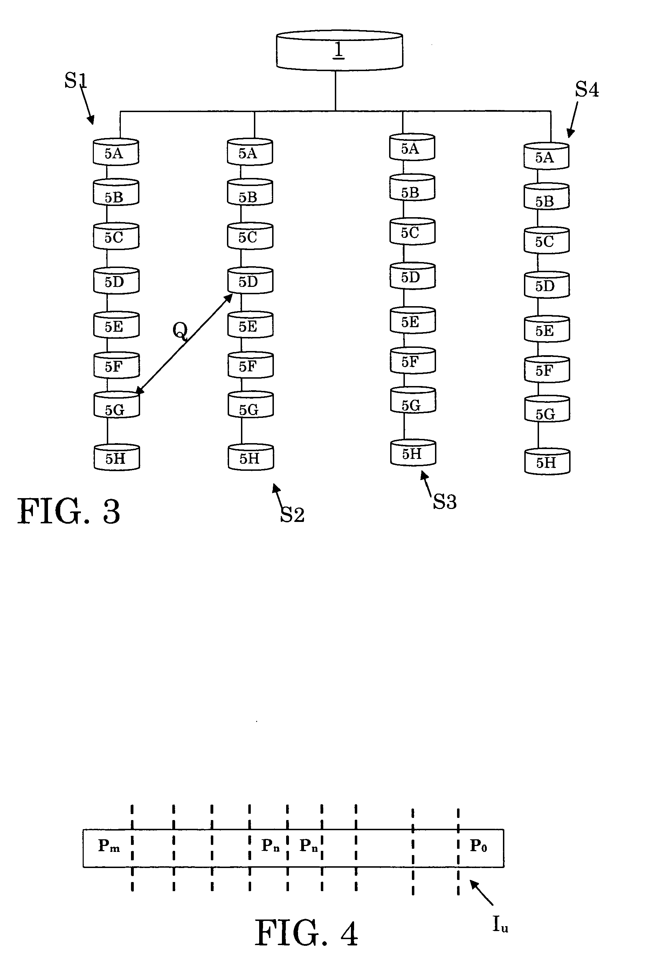

Updating of the narrowcasting information can be a continuous process, and/or it can be carried out periodically (for example once a week), depending for example on the type of information to be narrowcasted. An embodiment of a package of such updated information Iᵤ is schematically depicted in Fig. 4.

The present embodiment also comprises at least one communication network N configured to provide communication between the central server 1 and the local presentation systems 5. As an example, the network can be or can comprise the internet N, an intranet or both. Besides, for example, one or more other networks or sub-networks (not particularly shown) can be provided, to connect the central information server 1 and/or one or more of the local presentation systems 5 to the data communication network N. Such sub-networks can be part of respective local presentation systems 5. Each local presentation system 5 and the central server 1 may be connected or connectable to the same network N, for example via a respective network device M, which can include a suitable modem, router, server or other suitable network device (see also Fig. 2), as will be appreciated by the skilled person.

The central server 1 can be configured to provide updated narrowcasting information (i.e. information to be locally broadcasted by the local systems 5) in various ways. For example, the central server 1 can be configured to generate updated narrowcasting information, which may be at least partly under a central user control and/or can be carried out automatically, as will be appreciated by the skilled person. The providing of narrowcasting information as such is known from the prior art system and will therefore not be discussed in more detail in the present application.

Also, each local presentation system 5 can be configured in various ways. Figure 2 depicts an embodiment of a local system 5 (indicated by a dashed box), that includes or is provided with a local area network L (for example having wireless and/or wired communication lines) that is connected or connectable to the central network N via a suitable network connection, for example using a modem or other suitable device M. Generally, each network connection can be provided by a respective network service provider, and connection to the network can be via a telephone network, or in a different manner, as is commonly known to the skilled person.

A local presentation system 5 can include one or more processors 11, computers, memories 12, network devices M, and other components, that can be configured to carry out below-described methods during operation. One or more of these components 11, 12, M can be integrated with each other, or may be separate components. As is mentioned above, a local system can comprise a local application, executed by the processor 11, to control all the local eYe-Display store applications (i-Store), and/or to control one or more electronic screens 15, displays and/or other information presenters, to be arranged locally to present the narrowcasting information Iᵤ to a local environment, for example, to customers. Besides, as an example, the known system can include local Intelligent Shelf Communicators 16 to provide dedicated in store promotion and communication on the shelf. The mentioned one or more processors 11, -iStore application, screens 15 and Shelf communications 16 can preferably communicate with each other via the local area network L, and may be provided with their own memories to hold information to be presented thereby. The processor(s) 11 can be configured to update the content of the memory/memories 12 of the local system 5 in the case that the local system has received updated information via the network N.

Other devices 20 relating to the same location as the local system 5, can also be connected to the network N (for example via local network device M). For example such an other device can be a local payment system 20 (comprising for example one or more electronic cash registers), that does not have to be part of the local narrowcasting system 5, which local payment system 20 is to be connected to a remote central billing system via the network N. As follows from Fig. 2, both the local narrowcasting system 5 and one or more other devices 20 can share the same local network connection.

Figure 3 depicts a further embodiment of the narrowcasting system, showing an advantageous arrangement of data communication between the local presentation systems 5 and the central server 1. As follows from Fig. 3, there can be provided one or more first local presentation systems 5A (four in the present embodiment) configured to cooperate with the central server 1, via the network N, such that each first local presentation system 5A can receive the updated information Iᵤ from the central server 1 during operation. Besides, the remaining local presentation systems 5B-5H are arranged to receive updated information Iᵤ not directly from the central server 1, but indirectly, from the first local systems 5A, via the network N. For example, there are provided second local presentation systems 5B, wherein each second local presentation system 5B is configured to cooperate with a first local presentation system 5A, such that the second local presentation system receives the updated information Iᵤ from the first local presentation system (5A). Similarly, there can be provided third local presentation systems 5C, being configured to cooperate with a respective second local presentation system 5B, such that the third local presentation system receives the updated information Iᵤ from the second local presentation system 5B.

In this way, there is provided a plurality of series or cascades S1, S2, S3, S4 (that can also be called, for example, sequences or chains) of local presentation systems 5, wherein each series of presentation systems, S2, S3, S4 is configured to communicate the updated information, received by a respective first presentation system 5A of the series, serially through the series towards a last system 5H of the series. In the present embodiment, to provide the communication between the local systems 5, all of the local systems 5 are connected to the network N, however, this is not necessary since, for example, communication between one or more of the local systems 5 can also involve other suitable communication networks (for example an intranet).

In an advantageous embodiment, each first local presentation system 5A of each series S1-S4 is configured to take the initiative to start a respective information updating process, and sends a request for updating the information, to be presented, to the central server 1. The server 1 can then be configured to start sending updated information to the at least one first local presentation system 5A as a result of the server 1 having received said request. In this way, a first local system 5A can determine when the updating of the narrowcasting information is to commence.

Similarly, according to an embodiment, each further local presentation system 5B-5H (having a lower hierarchy in the series) of each series S1-S4 can be configured to send a request for updating the information, to be presented, to the local system having a higher hierarchy in the series, at suitable or predetermined times. For example, each local presentation system 5 can comprise a local network server M, to transmit received updated information Iᵤ to serially downstream local presentation systems 5 via a communication network N. In this case, the local presentation system 5 having the respective higher hierarchy can be configured to start sending updated information to the respective lower hierarchy presentation system 5 as a result of having received the request for an update.

Alternatively, according to an embodiment, a local presentation system 5 can be configured to automatically start sending updated information, received by that local system 5, to a downstream local presentation system 5. Also, there can be provided a combination of these embodiments, wherein one or more local systems 5 request local systems 5 having a respective higher hierarchy for updated information at certain operating times, wherein one or more local systems 5 automatically transmit received information to local systems 5 having a respective lower hierarchy.

Besides, advantageously, during operation, each first local presentation system 5A automatically starts transmitting at least part of updated information Iᵤ to a downstream second local presentation system 5B when (i.e. during) the first presentation system 5A still receives updated information from the central server 1. Similarly, each downstream local presentation system can preferably transmit at least part of updated information Iᵤ, received thereby, to a respective further downstream local presentation systems 5 as well during the receiving of updated information from a the serially upstream local presentation system. In this way, a swift hand over of the information through a sequence of local systems 5 can be achieved, wherein reception and transmitting of information parts can take place at substantially the same time at the local presentation systems 5.

In each case, a package of updated information can be sent as a whole from the central server 1 to the various sequences of local presentation systems and through the sequences S1-S4. According to a more preferred embodiment, the central server 1 is configured to transmit a package of updated information via the communication network N, such that the sever 1 transmits a subsequent part Pₙ₊₁ of the updated information Iᵤ to the first local presentation system 5A after the local presentation system has received a previous part Pₙ of that information Iᵤ. For example, the size of each part of the updated information is larger than 1 kb and smaller than 256 kb, which may depend on a chosen bandwidth. A respective dividing of the information into a number n of packages (n=0,...., m) is schematically indicated in Fig. 4, by dashed lines that separate various portion of the updated information. For example, herein, the various package parts Pₙ follow the same route through the network N, at subsequent times. Besides, preferably, the server 1 can be configured to start sending a subsequent part Pₙ₊₁ of the information package only after having received a confirmation from the downstream local presentation system 5A, that a previous package part Pₙ has been received by the local system 5A. To that aim, the local presentation system 5A can be configured to transmit a suitable confirmation message (for example a message that the package part Pₙ with a respective part number n has been received) to the central server 1 via the network N.

Similarly, the package parts Pₙ can be transmitted between the various local presentation systems 5 through each series S1-S4, wherein a subsequent part Pₙ₊₁ of the updated information Iᵤ is transmitted to a downstream/lower hierarchy local system after that local presentation system has received a previous part Pₙ of that information Iᵤ. Also, in this case, the downstream local presentation systems 5 can be configured to transmit suitable confirmation messages (for example a message that the package part Pₙ with a respective part number n has been received) to each respective information transmitting upstream presentation system 5.

To determine an optimal time when information updating is to start, for example, a first local system 5A can take into account local parameters, such as store opening times, local network communication capacity and expected local network communication load, and/or other parameters. As an example, during operation, at least one first local presentation system 5A can send a request for updated information to the central server 1, via the network N, in or before a predetermined time period, the predetermined time period relating to local inactivity at the respective location with which the local presentation system 5A is associated, wherein transmission of the updated information is preferably substantially carried out during said predetermined time period.

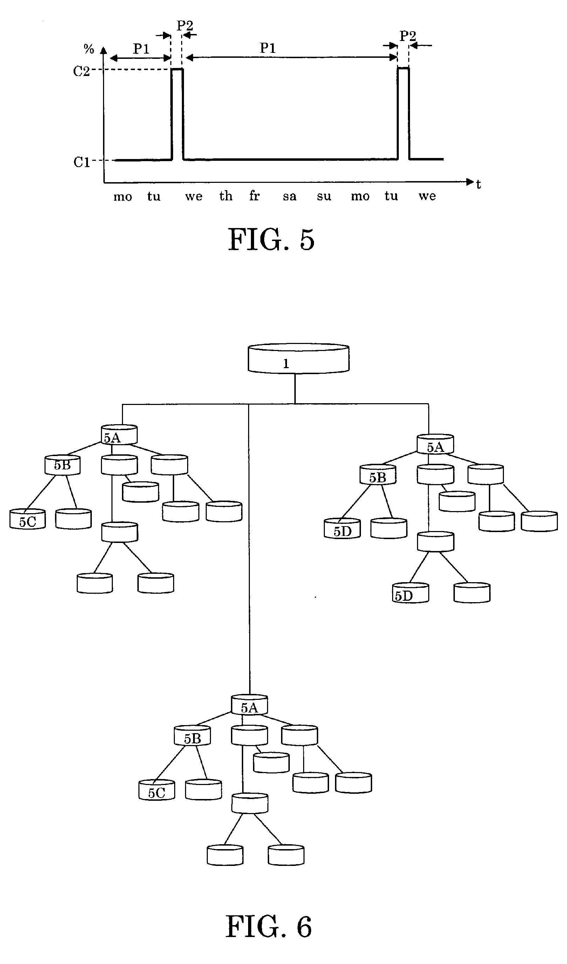

Besides, for example, a local presentation system 5 can be configured to use certain amounts of network capacity depending on certain parameters. Figure 5 depicts an example of a weekly time scheme (t=time, mo=Monday, tu=Tuesday, we=Wednesday etc.) relating to network capacity allowance (%) to a local presentation system 5. In this case, the local presentation system 5 is allowed only a small part C1 of available network data communication capacity (for example C1<10%, for example at most 5%) during first time periods P1, and a large part C2 of available network data communication capacity (for example more than 80%) during second time periods P2. As an example, each local presentation system 5 can comprise a timer, configured to determine when these time periods P1, P2 start and finish, wherein the local system 5 can be configured to use only up to the maximum allowed network capacity at the respective time period P1, P2, to transmit and/or receive updated narrow casting information. As an example, the first time periods P1 can involve a period when a respective store is opened, in which case one ore more other local network devices 20 might need as much of a locally available data communication bandwidth as possible to ensure proper communication via the network N. The second time periods P2 can involve a period when a respective store is closed, in which case such other local network devices 20 can be inactive. For example, a main part of transmitting updated information to the local presentation systems 5 can be carried out during such second time periods P2.

In an embodiment, individual network addresses, for example IP addresses in the case that the network is the internet, are assigned to the local presentation systems 5. In that case, in each sequence S1-S4 of local systems 5, each downstream local system can be provided with (i.e. 'knows') the network address of a respective upstream local system 5, the network address of that upstream system for example being stored in a memory 12 of the former local system 5. Thus, at least each second local presentation systems 5B can be provided with the network address of a respective first local presentation system 5A, each third local presentation systems 5C can be provided with the network address of a respective second local presentation system 5B, and so on for each whole respective sequence S1-S4 of local systems. Similarly, according to an embodiment, an upstream local system can be provided with the network address of the nearest downstream local system. In this way, the various local presentation systems of each series S1-S4 can find each other via the network N, to request and/or transmit the updated information. In other words, each local system 5 can be a network client that has a predefined peer (server) that is provided by another local system 5 (except for a mentioned first local system 5), wherein the client 5 can query the respective peer 5 periodically for information updates. If the peer indeed has updated information available, the client 5 can start downloading the update. Besides, each client 5 (i.e. local system) as such can run a network server that can be queried by another client in the same manner, leading to the distribution of the information through the respective cascade of clients.

In a further embodiment, at least one downstream local presentation system 5G of a first series S1 can be configured to determine availability of another (upstream) presentation system 5F in the same series S1 to receive updated information there-from, and to contact another source for such information, particularly a presentation system 5D of another series S2 in the case that it has determined that the other presentation system 5F of its own series is not available. For example, a secondary (downstream) local system 5 can try to connect several times to a primary (upstream) local system 5, before it is determined that the primary local system is not available.

In this way, delivery of information to downstream parts 5G-5H of the first series S1 can be ensured, even if one of the local systems 5F of that series is not available (i.e. when the chain is broken), for example due to malfunction or when the respective local system 5F is off-line. For example, each local presentation system 5B-5F of the first series S1 that is arranged downstream with respect of a first local system 5A can comprise at least one network address of at least one local system of another series S2-S4, to contact that other local system for updating if required (a communication line, via the network N, between local systems of the first and second series S1, S2 is indicated by an arrow Q in Fig. 3).

Alternatively, a downstream local presentation system 5G of a first series S1 can be configured to determine availability of another (upstream) presentation system 5F in the same series S1 to receive updated information there-from, and to contact another local system 5 of the same group S1, or the central server 1 if desired, in the case that it has determined that the other presentation system 5F of its own series is not available

During operation of the system shown in Figures 1-5, updated narrowcasting information Iᵤ is provided by the central server 1. The updated information is distributed to the all local presentation systems 5 of the various chains S1-S4, particularly in the sequence shown in Fig. 3, to replace information that is presented by these local systems. Thus, during use, the updated information Iᵤ can be transmitted to the first presentation systems 5 being associated with first locations, and from those first presentation system 5A to respective second local presentation system 5B being associated with second locations, and so on until all presentation systems 5A-5H of each of the series S1-S4 has received the full update. As follows from the above, the transmission can involve sending requests for updating the information, to be presented, to the central server 1, and transmitting the updated information to the at least one first local presentation system 5A as a result of the server 1 having received said request. For example, an information package can be divided into subsequent parts to be transmitted, as has been mentioned above regarding Fig. 4. Besides, the amount of network capacity (of a maximum capacity) that is being allowed for the updating process can be time dependent (see for example Fig. 5)

The method preferably includes that the local presentation systems 5 send requests for updated information in or before a predetermined time period, the predetermined time period relating to local inactivity at the respective location with which the local presentation system is associated, wherein transmission of the updated information is preferably substantially carried out during said predetermined time period.

Besides, preferably, the updated information is being communicated serially through each of the cascades S1-S4 of local information presentation systems 5, from one of the systems to another, wherein more preferably, transmission of data from one local system to a subsequent local system 5 is automatically commenced while the former local system is still receiving data. For example, the above described method (which can be or comprise a network communication protocol) can provide distribution of data packages, containing for example multiple files, across multiple locations, wherein preferably files are being sent to a next location (i.e. to a downstream local system 5) from a previous location (i.e. a respective upstream local system 5) while they are still being received at the previous location, leading to a considerable reduction of overall distribution time.

Also, local presentation systems 5 can determine communication availability of another local presentation system in the own group of systems, and in case the other presentation system is not available in the same group, request the updated information from another source of such information (for example from a local system of a different group).

After a local presentation system 5 has been completely updated in this way (i.e. after having received a fall information package Iᵤ), the local system 5 can automatically switch to presenting the updated information instead of previously locally available information (i.e., replace the former information with the newly received updated information). The switching of the information can be carried out by a local processor 11, for example by controlling local narrowcasting appliances 15, 16 to start broadcasting the updated information and/or by loading the updated information into one or more local memories 12 of the local narrowcasting system 5, and/or in a different manner.

Figure 6 depicts an alternative embodiment, which differs from the embodiment shown in Fig. 3 in that upstream local presentation systems can function as information servers to more than one respective downstream information systems. Thus, during operation of the embodiment of Fig. 6, these upstream local presentation systems can transmit updated information (or parts thereof) to several respective downstream information systems, via the network N.

In the above, the system and method are particularly described concerning advantageous narrowcasting embodiments.

Besides, according to an embodiment, a system and method according to the present invention can be used for distributing updated near-time information, for example containing weather information, news, stock exchange information, news headlines and/or traffic information, and other types of near-time information. For example, updated near-time information can be generated or provided centrally (by a suitable central server), to be distributed to a large number of consumer (i.e. end-user) appliances, for example Personal Digital Assistants (PDAs), cellular phones, computers, home-computers, and/or other devices. In this case, for example, each consumer appliance can be configured or configurable to be a local presentation system 5 according to embodiments of the present invention. For example, there can be provided at least one first local consumer appliance configured to cooperate with a central server, such that the first local consumer appliance receives the updated information from the central server during operation, and there can be provided at least one second local consumer appliance, which can cooperate with a first consumer appliance to receive the updated information there-from.

In a further embodiment, such near-time an updates near-time information package can be relatively small, and is preferably transmitted as a whole (i.e., is not being divided into subsequent parts, as described above concerning Fig. 4, for transmission). Also, the system and method can be applied for other purposes, as will be appreciated by the skilled person.

Although the illustrative embodiments of the present invention have been described in greater detail with reference to the accompanying drawings, it will be understood that the invention is not limited to those embodiments. Various changes or modifications may be effected by one skilled in the art without departing from the scope or the spirit of the invention as defined in the claims.

It is to be understood that in the present application, the term "comprising" does not exclude other elements or steps. Also, each of the terms "a" and "an" does not exclude a plurality. Also, a single processor or other unit may fulfil functions of several means recited in the claims. Any reference sign(s) in the claims shall not be construed as limiting the scope of the claims.

For example, in the present patent application, the presentation of information can involve various ways to present information, for example showing, playing, displaying, announcing, printing or otherwise presenting information. The information can be presented one-way only, without customer interaction, and/or with customer interaction (i.e. interactively) in which case the customer of a local store can determine or change the way or order of information to be presented. In a particular embodiment, the information can be presented periodically, or be repeated, during opening hours of a local environment where the information is to be provided to by-passers or customers.

The narrowcasting information to be presented can include various types of information, for example audio and/or video information, text, speech, music, multimedia information and/or other information. Information presentation components of local presentation systems can include displays, speakers, touch screens, printers or other suitable information presenters, depending on the type of information to be presented. The content of the information can include, for example, information relating to the local environment, product details, advertisement, shopping assistance information, recipes, and/or other types of content.

Besides, in an embodiment, one local information presentation can be associated with a single store to present the information, or with several stores, for example a number of stores that are physically located near each other.

Besides, in an embodiment, several groups S1-S4 of local information systems 5 can be updated with the same information having the same content, or with different information having different content (i.e., one group S1 receives a first information update that differs from a second information update to be transmitted to another group S2). As an example, different series S1-S4 of local systems can relate to different geographical regions, for example countries, provinces, or cities, and/or to different consumers, wherein a different information updates are being transmitted to the different series S1-S4 to take into account local particular differences between the regions and/or consumers (for example differences relating to expected local interests, local competitors, languages, and other parameters).

Also, one or more local information presentation systems 5 can have fixed locations, or be mobile. For example, local presentation systems 5 can be provided at/in shops or stores, airfields, railway stations, community centres, and/or be associated with transportation means, for example vehicles, trains, taxis, airplanes, and/or portable communicating devices, for example cellular phones or personal digital assistants (PDAs) and/or other mobile objects.

## Claims

1. A system for distributing information, the system comprising:
- a central server (1) configured to provide updated information (Iᵤ);
- one or more communication networks (N), for example internet and/or an intranet, configured to provide communication between the central server (1) and local presentation systems (5);
- a plurality of local information presentation systems (5) configured to locally present information; the local presentation systems (5) comprising:
- at least one first local presentation system (5A) configured to cooperate with the central server (1), such that the first local presentation system (5A) receives the updated information (Iᵤ) from the central server (1) during operation; and
- at least one second local presentation system (5B), wherein each second local presentation system (5B) is configured to cooperate with a first local presentation system (5A), such that the second local presentation system receives the updated information (Iᵤ) from the first local presentation system (5A).

2. The system according to claim 1, wherein each first local presentation system (5A) is configured to send a request for updating the information, to be presented, to the central server (1), wherein the server (1) is configured to start sending updated information to the at least one first local presentation system (5A) as a result of the server (1) having received said request.

3. The system according to any of the preceding claims, wherein the central server (1) is configured to transmit a package of updated information via the communication network (N), such that the sever (1) transmits a subsequent part (Pₙ₊₁) of the updated information (Iᵤ) to the first local presentation system (5A) after the local presentation system has received a previous part (Pₙ) of that information (Iᵤ), wherein the size of each part of the updated information is larger than 1 kb and smaller than 1 Mb.

4. The system according to any of the preceding claims, comprising at least one third local presentation system (5C), wherein each third local presentation system (5C) is configured to cooperate with a second local presentation system (5B), such that the third local presentation system receives the updated information (Iᵤ) from the second local presentation system (5B).

5. The system according to any of the preceding claims, wherein each first local presentation system (5A) is configured to automatically start transmitting at least part of updated information (Iᵤ) to a downstream second local presentation system (5B) when the first presentation system (5A) receives updated information from the central server (1), wherein each downstream second local presentation system (5B) can preferably transmit updated information (Iᵤ) to one or more further downstream local presentation systems (5) when the second presentation system (5A) receives updated information from the first local presentation system (5A).

6. The system according to any of the preceding claims, wherein the plurality of local presentation systems (5) comprises one or more series of local presentation systems (5), wherein each series of presentation systems is configured to communicate the updated information, received by a respective first presentation system (5A), serially through the series.

7. The system according to any of the preceding claims, wherein the plurality of local presentation systems (5) is arranged into at least a first and second group of local presentation systems (5), wherein at least one local presentation system of the first group is configured to determine availability of another presentation system in the same group to receive updated information there from, and to contact another source for such information in the case that it has determined that the other presentation system in the same group is not available.

8. The system according to any of the preceding claims, wherein each local presentation system (5) comprises a local network server to transmit updated information, to be locally presented, to other local presentation systems (5) via a communication network (N).

9. The system according to any of the preceding claims, wherein at least each second local presentation systems (5B) has been provided with a network address of a first local presentation system (5A).

10. The system according to any of the preceding claims, wherein the information contains one or more of audio and video information, wherein each local presentation system comprises one or more presentation devices configured to present the information to a respective local environment.

11. Method for distributing information, the method comprising:
- providing a number of presentation systems that locally present information;
- centrally generating updated information; and
- distributing the updated information to the local presentation systems, to replace information that is presented by these local systems; the method being **characterised in that** it comprises:
- transmitting the updated information (Iᵤ) to a first presentation system being associated with a first location; and
- transmitting the updated information (Iᵤ) from the first presentation system (5A) to a second local presentation system being associated with a second location.

12. The method according to claim 11, comprising:
- sending a request for updating the information, to be presented, to a central server (1), and transmitting updated information to the at least one first local presentation system (5A) as a result of the server (1) having received said request.

13. The method according to claim 11 or 12, the method involving at least one local presentation system (5) sending a request for updated information in or before a predetermined time period, the predetermined time period relating to local inactivity at the respective location with which the local presentation system is associated, wherein transmission of the updated information is preferably substantially carried out during said predetermined time period.

14. The method according to any of the claims 11-13, comprising communicating the updated information serially through at least one series of local information presentation systems, from one of the systems to another.

15. The method according to any of the claims 11-14, involving at least one local presentation system (5) performing the steps of:
- determining communication availability of another local presentation system in a first group of such systems; and
- in case the other presentation system is not available in the same group, the local presentation system requesting updated information from another source of such information.

16. The method according to any of the claims 11-15, wherein the method involves narrowcasting the information.

17. The method according to any of the claims 11-16, wherein the updated information contains near-time information, for example at least one of the following information: weather information, news, stock exchange information, news headlines and/or traffic information.

18. A computer program comprising computer code for performing a method according to any of the claims 11-17 when the program is being executed by a computer.

19. Computer network communication protocol configured to carry out the method according to any of the claims 11-17 when executed by a computer communication network.
